# EUROPEAN PATENT APPLICATION

(11) **EP 4 796 355 A1**
(43) Date of publication of application: **26.08.2026**
(21) Application number: 25221370.7
(22) Date of filing: 08.12.2025
(51) Int. Cl.: B60K 1/00, B60K 1/04, B60K 15/063, B60L 53/16, B60R 16/02, B62D 25/16, B62D 25/20

(54) **ELECTRIC VEHICLE**

(30) Priority: 21.02.2025 JP 2025026598
(71) Applicant: Toyota Jidosha Kabushiki Kaisha, Toyota-shi, Aichi-ken 471-8571 (JP)
(72) Inventor: OHTA, Chikashi, TOYOTA-SHI, AICHI-KEN, 471-8571 (JP); SASAKI, Shoichi, TOYOTA-SHI, AICHI-KEN, 471-8571 (JP); TOMITA, Makoto, TOYOTA-SHI, AICHI-KEN, 471-8571 (JP); NISHIGAYA, Masabumi, TOYOTA-SHI, AICHI-KEN, 471-8571 (JP); KAWASHIMA, Takahiro, TOYOTA-SHI, AICHI-KEN, 471-8571 (JP); HARADA, Taku, TOYOTA-SHI, AICHI-KEN, 471-8571 (JP); HISHINUMA, Shoji, TOYOTA-SHI, AICHI-KEN, 471-8571 (JP)
(74) Representative: Cabinet Beau de Loménie

(57) **Abstract**

An electric vehicle (10) includes a battery pack (14) and a charging port (30). The battery pack (14) is disposed below a floor panel (12). The charging port (30) is disposed in a side surface of the electric vehicle (10) and above the battery pack (14). The battery pack (14) and the charging port (30) are electrically connected to each other by a cable (53). The cable (53) is routed from the charging (30) port downward and then inward along a wheel well (23), and further extends from the lower end of the wheel well (23) toward the battery pack (14) at a position below the floor panel (12) and is connected to the battery pack (14).

## Description

### CROSS-REFERENCE TO RELATED APPLICATIONS

This application is based upon and claims the benefit of priority from Japanese Patent Application No. 2025-026598, filed on February 21, 2025, the entire contents of which are incorporated herein by reference and can be referred to when considering the present application.

### BACKGROUND

### 1. Field

The present disclosure relates to an electric vehicle.

### 2. Description of Related Art

JP2018-202889A discloses an electric vehicle in which a battery unit is provided beneath the floor of a vehicle.

Some electric vehicles are equipped with a battery that can be charged by connection to an external power supply. Such an electric vehicle has a charging port to be coupled to the external power supply. The battery disposed beneath the vehicle floor is electrically connected to the charging port via a cable. There is a demand to reduce interference between the cable and components of the electric vehicle.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In one general aspect, an electric vehicle includes a passenger compartment, a floor panel that forms a floor surface of the passenger compartment, a front compartment disposed forward of the passenger compartment in a vehicle front-rear direction, a wheel well, a motor that is a power source, a battery cell configured to store electric power to be supplied to the motor, a battery pack that accommodates the battery cell therein, and a charging port configured to be connected to a connector of an external power supply. The motor is disposed in the front compartment. The battery pack is disposed below the floor panel in a vehicle vertical direction. The charging port is disposed in a side surface of the electric vehicle and above the battery pack in the vehicle vertical direction. The battery pack and the charging port are electrically connected to each other by a cable. The cable is routed downward from the charging port in the vehicle vertical direction and then inward in a vehicle width direction along the wheel well, and further extends from a lower end of the wheel well toward the battery pack at a position below the floor panel in the vehicle vertical direction, and is connected to the battery pack.

Other features and aspects will be apparent from the following detailed description, the drawings, and the claims.

### BRIEF DESCRIPTION OF THE DRAWINGS

Fig. 1 is a schematic diagram showing an internal structure of a front portion of an electric vehicle according to a first embodiment.
Fig. 2 is a schematic diagram showing an arrangement of devices of the electric vehicle shown in Fig. 1.
Fig. 3 is a schematic diagram showing a configuration of a drivetrain and an electrical system of the electric vehicle shown in Fig. 1.
Fig. 4 is a schematic diagram showing a manner in which a charging port and a battery pack of the electric vehicle shown in Fig. 1 are electrically connected.
Fig. 5 is a schematic diagram showing a structure of a cable for electrically connecting the charging port and the battery pack shown in Fig. 4.
Fig. 6 is a schematic diagram showing an internal structure of a rear portion of an electric vehicle according to a second embodiment.
Fig. 7 is a schematic diagram showing an arrangement of devices of the electric vehicle shown in Fig. 6.
Fig. 8 is a schematic diagram showing a manner in which a charging port and a battery pack of the electric vehicle shown in Fig. 6 are electrically connected.

Throughout the drawings and the detailed description, the same reference numerals refer to the same elements. The drawings may not be to scale, and the relative size, proportions, and depiction of elements in the drawings may be exaggerated for clarity, illustration, and convenience.

### DETAILED DESCRIPTION

This description provides a comprehensive understanding of the methods, apparatuses, and/or systems described. Modifications and equivalents of the methods, apparatuses, and/or systems described are apparent to one of ordinary skill in the art. Sequences of operations are exemplary, and may be changed as apparent to one of ordinary skill in the art, with the exception of operations necessarily occurring in a certain order. Descriptions of functions and constructions that are well known to one of ordinary skill in the art may be omitted.

Exemplary embodiments may have different forms, and are not limited to the examples described. However, the examples described are thorough and complete, and convey the full scope of the disclosure to one of ordinary skill in the art.

In this specification, "at least one of A and B" should be understood to mean "only A, only B, or both A and B."

### First Embodiment

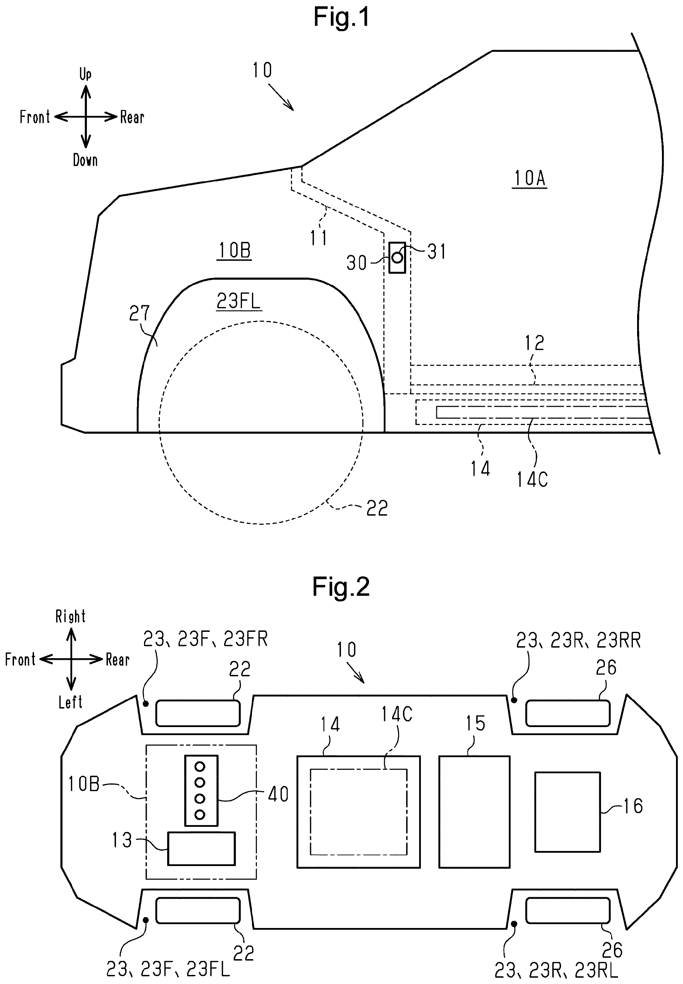

An electric vehicle 10 according to a first embodiment will now be described with reference to Figs. 1 to 5. In the following description, the terms front, rear, right, left, up, and down refer to directions as viewed from the perspective of an occupant facing forward in the electric vehicle 10. The left-right direction corresponds to the vehicle width direction. The vertical direction corresponds to the down-up direction of the vehicle. The various positions of the elements are indicating along the corresponding direction.

### Configuration of the Electric Vehicle 10

Fig. 1 schematically shows an internal structure of a front portion of the electric vehicle 10 when the electric vehicle 10 is viewed from the left side.

### As shown in Fig. 1, the electric vehicle 10 includes a dashboard panel 11, a floor panel 12, and a battery pack 14. The dashboard panel 11 partitions an internal space of the electric vehicle 10 into a passenger compartment 10A and a front compartment 10B. The front compartment 10B is provided forward of the passenger compartment 10A in the vehicle front-rear direction. The floor panel 12 forms a floor surface of the passenger compartment 10A. A battery pack 14 is disposed beneath the floor panel 12.

Fig. 2 schematically shows the arrangement of devices disposed below the floor panel 12 when the electric vehicle 10 is viewed from above.

As shown in Fig. 2, the electric vehicle 10 includes left and right front wheels 22 and left and right rear wheels 26. Further, the electric vehicle 10 includes multiple wheel wells 23 including left and right front wheel wells 23F and left and right rear wheel wells 23R.

The left and right front wheel wells 23F are located forward of the battery pack 14. The left and right rear wheel wells 23R are located rearward of the battery pack 14.

The left and right front wheel wells 23F are a front right wheel well 23FR and a front left wheel well 23FL. The left and right rear wheel wells 23R are a rear right wheel well 23RR and a rear left wheel well 23RL.

The front right wheel well 23FR houses the right front wheel 22. The front left wheel well 23FL houses the left front wheel 22. The rear right wheel well 23RR houses the right rear wheel 26. The rear left wheel well 23RL houses the left rear wheel 26.

As shown in Fig. 1, the front left wheel well 23FL, which houses the left front wheel 22, is disposed in the left side surface of the front portion of the electric vehicle 10. The front compartment 10B and the front left wheel well 23FL are separated from each other by a partition wall 27. The partition wall 27 is formed by a panel member and a frame member that form part of the vehicle body of the electric vehicle 10, and a plastic cover member that covers the surfaces of the panel member and the frame member. The front left wheel well 23FL is located forward of the battery pack 14.

The battery pack 14 accommodates multiple battery cells 14C therein. In Figs. 1 to 3, 6, and 7, the battery cells 14C, which are tightly packed within the battery pack 14, are collectively depicted surrounded by a long-dash short-dash line. The battery cells 14C store electric power to be supplied to a first motor-generator MG1, a second motor-generator MG2, and a rear-wheel driving motor-generator 16, which are described below.

The electric vehicle 10 includes a charging port 30 that is connectable to an external power supply in order to charge the battery cells 14C with electric power supplied from the external power supply. The charging port 30 is provided in a left side surface of the electric vehicle 10. The charging port 30 is disposed in a side surface of the electric vehicle 10 and above the battery pack 14. The charging port 30 is disposed forward of the battery pack 14. The charging port 30 is disposed rearward of the front left wheel well 23FL.

The charging port 30 is connectable to a connector of an external power supply. Specifically, the charging port 30 is provided with a charging inlet 31, to which a connector of an external power supply is connected. When the connector of the external power supply is connected to the charging inlet 31, the electric vehicle 10 is connected to the external power supply. The charging port 30 is connectable to a DC power supply for fast charging.

### Arrangement of Devices of the Electric Vehicle 10

As shown in Fig. 2, the electric vehicle 10 includes an engine 40 and an integrated electromechanical unit 13 in the front compartment 10B. The integrated electromechanical unit 13 is described below. The electric vehicle 10 includes the battery pack 14, a fuel tank 15, and the rear-wheel driving motor-generator 16.

The fuel tank 15 is disposed rearward of the battery pack 14 and below the floor panel 12. The fuel tank 15 stores fuel to be supplied to the engine 40.

### Drivetrain and Electrical System of the Electric Vehicle 10

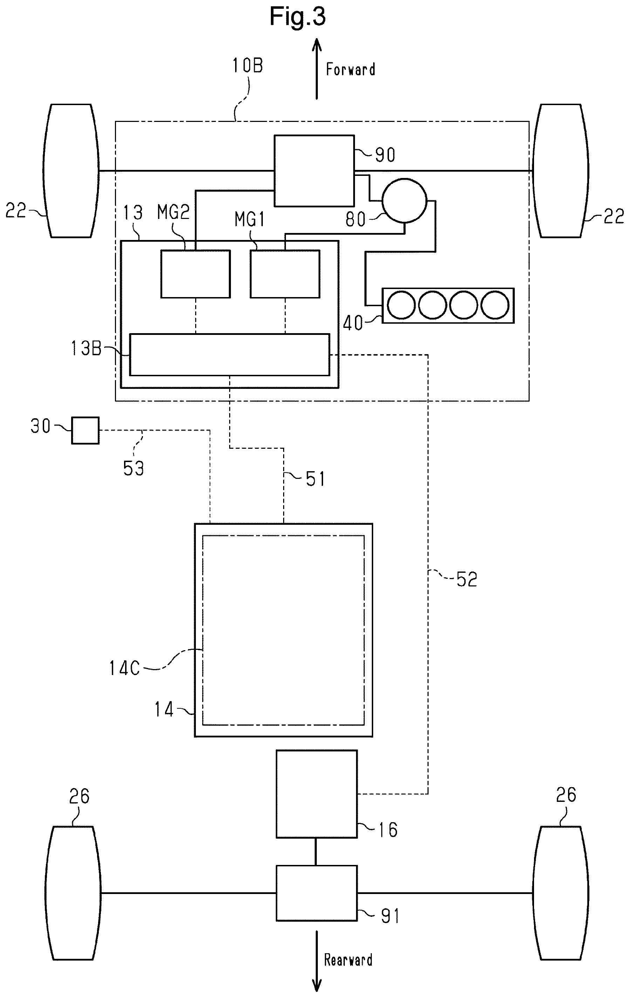

Fig. 3 schematically shows a configuration of a drivetrain and an electrical system of the electric vehicle 10. Broken lines shown in Fig. 3 indicate electrical connections.

As shown in Fig. 3, the electric vehicle 10 includes, in the front compartment 10B, the engine 40, the first motor-generator MG1, the second motor-generator MG2, an electric power controller 13B, a power split mechanism 80, and a speed reduction mechanism 90. The integrated electromechanical unit 13 is formed by integrating the first motor-generator MG1, the second motor-generator MG2, and the electric power controller 13B. As described above, the engine 40 and one or more motors are disposed in the front compartment 10B, which is located forward of the passenger compartment 10A.

The electric vehicle 10 includes the rear-wheel driving motor-generator 16 and a rear-wheel speed reduction mechanism 91, which are disposed rearward of the battery pack 14.

The engine 40 is coupled to the left and right front wheels 22 via the power split mechanism 80 and the speed reduction mechanism 90. The power split mechanism 80 is a planetary gear mechanism. The power split mechanism 80 is capable of splitting the driving force among the engine 40, the first motor-generator MG1, and the left and right front wheels 22. The power split mechanism 80 and the speed reduction mechanism 90 form a power transmission mechanism. The rotational driving force of the engine 40 is transmitted to the left and right front wheels 22 via the power transmission mechanism. The engine 40 is a power source of the electric vehicle 10.

The first motor-generator MG1 is coupled to the power split mechanism 80. The first motor-generator MG1 is, for example, a three-phase AC motor-generator. The first motor-generator MG1 is electrically connected to the battery pack 14 via the electric power controller 13B.

The second motor-generator MG2 is coupled to the left and right front wheels 22 via the speed reduction mechanism 90. The second motor-generator MG2 is, for example, a three-phase AC motor-generator. The second motor-generator MG2 is electrically connected to the battery pack 14 via the electric power controller 13B.

The electric power controller 13B and the battery pack 14 are electrically connected to each other by a first cable 51.

The first motor-generator MG1 functions as a motor that generates rotational driving force in response to a supply of electric power from the electric power controller 13B. The electric power controller 13B drives the first motor-generator MG1. The rotational driving force of the first motor-generator MG1 is transmitted to the left and right front wheels 22 via the power split mechanism 80 and the speed reduction mechanism 90. The first motor-generator MG1 functions as a motor that is a power source of the electric vehicle 10. The first motor-generator MG1 also acts as a starter to drive the crankshaft, which is the output shaft of the engine 40, when starting the engine 40.

The second motor-generator MG2 functions as a motor that generates rotational driving force in response to a supply of electric power from the electric power controller 13B. The electric power controller 13B drives the second motor-generator MG2. The rotational driving force of the second motor-generator MG2 is transmitted to the left and right front wheels 22 via the speed reduction mechanism 90. The second motor-generator MG2 functions as a motor that is a power source of the electric vehicle 10. The integrated electromechanical unit 13 is a unit in which one or more motors and the electric power controller 13B are integrated.

The first motor-generator MG1 generates electric power by receiving the driving force of the engine 40 or the driving force from the front wheels 22. AC power generated by the first motor-generator MG1 is converted into DC power by the electric power controller 13B. The battery cells 14C are charged with DC power converted by the electric power controller 13B. The electric power controller 13B functions as an inverter. The electric power controller 13B may function as a converter that boosts the electric power supplied from the battery cells 14C.

DC power is supplied from the battery cells 14C to the electric power controller 13B. The supplied DC power is converted into AC power by the electric power controller 13B. The AC power converted by the electric power controller 13B is supplied to the second motor-generator MG2.

The electric vehicle 10 performs charging through regenerative braking. For example, when the electric vehicle 10 is decelerated, the second motor-generator MG2 generates electric power using the driving force from the front wheels 22. The battery cells 14C are charged with the generated electric power. The second motor-generator MG2 functions as a power generator. AC power generated by the second motor-generator MG2 is converted into DC power by the electric power controller 13B. The battery cells 14C are charged with DC power converted by the electric power controller 13B.

The rear-wheel driving motor-generator 16 is coupled to the left and right rear wheels 26 via the rear-wheel speed reduction mechanism 91. The rear-wheel driving motor-generator 16 is, for example, a three-phase AC motor-generator. The rear-wheel driving motor-generator 16 is electrically connected to the battery pack 14 via the electric power controller 13B. The rear-wheel driving motor-generator 16 and the electric power controller 13B are electrically connected by a second cable 52.

The rear-wheel driving motor-generator 16 functions as a motor that generates rotational driving force in response to a supply of electric power from the electric power controller 13B. The electric power controller 13B drives the rear-wheel driving motor-generator 16. The rotational driving force of the rear-wheel driving motor-generator 16 is transmitted to the left and right rear wheels 26 via the rear-wheel speed reduction mechanism 91, which is a power transmission mechanism. The rear-wheel driving motor-generator 16 functions as a power source of the electric vehicle 10.

The electric vehicle 10 performs charging through regenerative braking. For example, when the electric vehicle 10 is decelerated, the rear-wheel driving motor-generator 16 generates electric power using the driving force from the left and right rear wheels 26. The battery cells 14C are charged with the generated electric power. The rear-wheel driving motor-generator 16 functions as a generator. AC power generated by the rear-wheel driving motor-generator 16 is converted into DC power by the electric power controller 13B. The battery cells 14C are charged with DC power converted by the electric power controller 13B.

The charging port 30 and the battery pack 14 are electrically connected by a third cable 53. DC current is supplied to the battery cells 14C from the outside of the electric vehicle 10 through the charging port 30 and the third cable 53. The electric vehicle 10 is a plug-in hybrid electric vehicle.

### Routing of the Third Cable 53

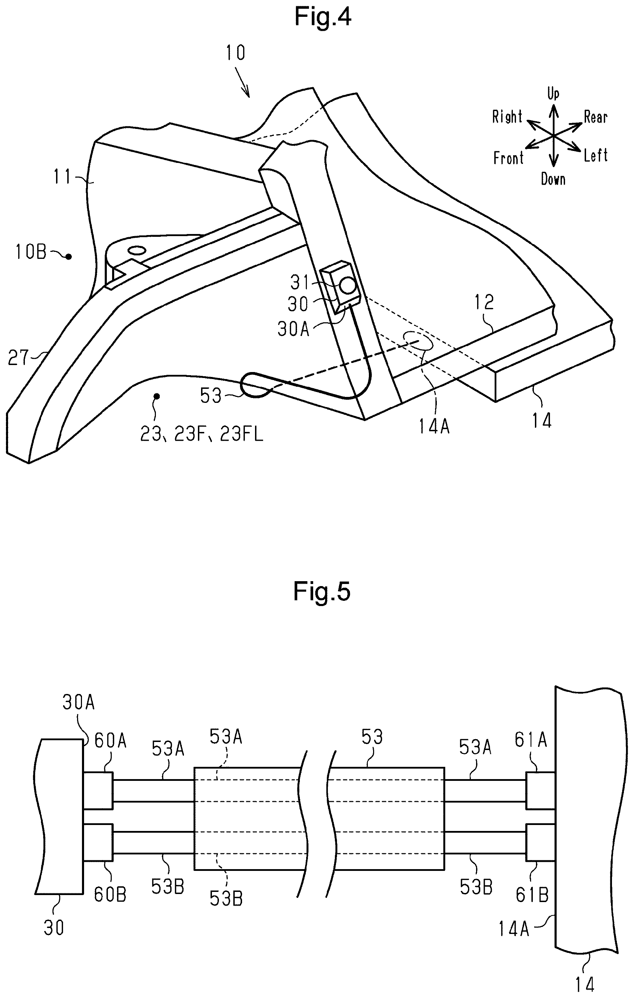

Fig. 4 schematically shows the internal structure of the electric vehicle 10 as viewed from a left-front direction.

The front compartment 10B is part of the internal space of the electric vehicle 10, and specifically, a space that is forward of the dashboard panel 11 and on the inner side of the partition wall 27, as shown in Fig. 4.

The partition wall 27 separates the front compartment 10B from the front left wheel well 23FL. The space on the outer side of the partition wall 27 is the front left wheel well 23FL.

The charging port 30 includes a first connection portion 30A, to which the third cable 53 is connected, on the lower surface in the vehicle vertical direction. The battery pack 14 includes a second connection portion 14A, to which the third cable 53 is connected, on the front surface in the vehicle front-rear direction.

The third cable 53 is routed downward from the first connection portion 30A of the charging port 30 and then inward in the vehicle width direction along the front left wheel well 23FL. The third cable 53 further extends rearward from the lower end of the front left wheel well 23FL at a position below the floor panel 12 and is connected to the second connection portion 14A of the battery pack 14. The third cable 53 is a DC cable through which high-voltage DC current flows.

### Configuration of the Third Cable 53

As shown in Fig. 5, the third cable 53 includes a positive power line 53A and a negative power line 53B. The first connection portion 30A of the charging port 30 includes a positive connection portion 60A, to which the positive power line 53A is connected, and a negative connection portion 60B, to which the negative power line 53B is connected. The second connection portion 14A of the battery pack 14 includes a positive connection portion 61A, to which the positive power line 53A is connected, and a negative connection portion 61B, to which the negative power line 53B is connected.

The positive power line 53A is connected to the positive connection portion 60A of the first connection portion 30A and the positive connection portion 61A of the second connection portion 14A. The negative power line 53B is connected to the negative connection portion 60B of the first connection portion 30A and the negative connection portion 61B of the second connection portion 14A. As a result, the charging port 30 and the battery pack 14 are electrically connected by the third cable 53.

### Operation of the First Embodiment

The charging port 30 is provided outside the front compartment 10B. The front left wheel well 23FL is outside the front compartment 10B. The space below the floor panel 12 is outside the front compartment 10B. The third cable 53 electrically connects the battery pack 14 and the charging port 30 through outside the front compartment 10B.

### Advantages of the First Embodiment

(1-1) The electric vehicle 10 reduces the possibility that the third cable 53, which electrically connects the battery pack 14 and the charging port 30, interferes with components in the front compartment 10B.

(1-2) The charging port 30 includes the first connection portion 30A, to which the third cable 53 is connected, on the lower surface in the vehicle vertical direction. The charging port 30 is disposed above the battery pack 14. When the first connection portion 30A is provided on the lower surface of the charging port 30 in the vehicle vertical direction, the first connection portion 30A is closer to the battery pack 14 than when the first connection portion 30A is provided on another surface of the charging port 30. Therefore, the charging port 30 and the battery pack 14 is connected by a relatively short third cable 53.

(1-3) The electric vehicle 10 includes the front left wheel well 23FL, which is located forward of the battery pack 14. The charging port 30 is disposed forward of the battery pack 14. The third cable 53 extends along the front left wheel well 23FL. The battery pack 14 includes the second connection portion 14A, to which the third cable 53 is connected, on the front surface.

In the electric vehicle 10 of the present embodiment, the distance between the first connection portion 30A and the second connection portion 14A is shorter than in a vehicle in which the charging port 30 is disposed rearward of the battery pack 14 and the second connection portion 14A is provided on the front surface of the battery pack 14. In the electric vehicle 10 of the present embodiment, the distance between the first connection portion 30A and the second connection portion 14A is shorter than in a vehicle in which the charging port 30 is disposed forward of the battery pack 14 and the second connection portion 14A is provided on the rear surface of the battery pack 14. Accordingly, the length of the third cable 53, which electrically connects the charging port 30 and the battery pack 14, can be shortened.

When the third cable 53 is shortened, the weight of the third cable 53 is reduced. Reduction in the weight of the third cable 53 reduces the weight of the electric vehicle 10. When the third cable 53 is shortened, power loss in the third cable 53 is also reduced. In this manner, both the weight of the electric vehicle 10 and the power loss in the third cable 53 can be reduced.

(1-4) The electric vehicle 10 includes the engine 40, which is a power source, and the fuel tank 15, which stores fuel to be supplied to the engine 40. The fuel tank 15 is disposed rearward of the battery pack 14 and below the floor panel 12. The second connection portion 14A is provided on the front surface of the battery pack 14. The third cable 53 is routed forward of the battery pack 14. This configuration reduces the possibility that the third cable 53 interferes with the fuel tank 15.

(1-5) The charging port 30 is configured to be connected to a DC power supply for fast charging. The third cable 53 is a DC cable. In fast charging, in order to supply a large amount of electric power to the battery cells 14C within a short time, it is necessary to allow a large current to flow through the third cable 53. To allow a large current to flow through the third cable 53 while reducing heat generation of the third cable 53, it is necessary to reduce the resistance of the conductor by increasing the cross-sectional area of the conductor in the third cable 53. Accordingly, the third cable 53 tends to be thick, the third cable 53 being connected to the first connection portion 30A of the charging port 30, which is configured to be connected to a DC power supply for fast charging. In the present embodiment, since the length of the third cable 53, which tends to be thick, can be shortened, the weight of the electric vehicle 10 can be reduced.

### Modifications of the First Embodiment

The first embodiment may be modified as follows. The first embodiment and the following modifications related to the first embodiment can be combined as long as the combined modifications remain technically consistent with each other.

The charging port 30 may be disposed in the right side surface of the electric vehicle 10 and forward of the battery pack 14. In this case, the third cable 53 is routed downward from the first connection portion 30A of the charging port 30 and then inward in the vehicle width direction along the front right wheel well 23FR. The third cable 53 further extends rearward from the lower end of the front right wheel well 23FR at a position below the floor panel 12 and is connected to the second connection portion 14A of the battery pack 14.

The fuel tank 15 may be disposed forward of the battery pack 14.

### Second Embodiment

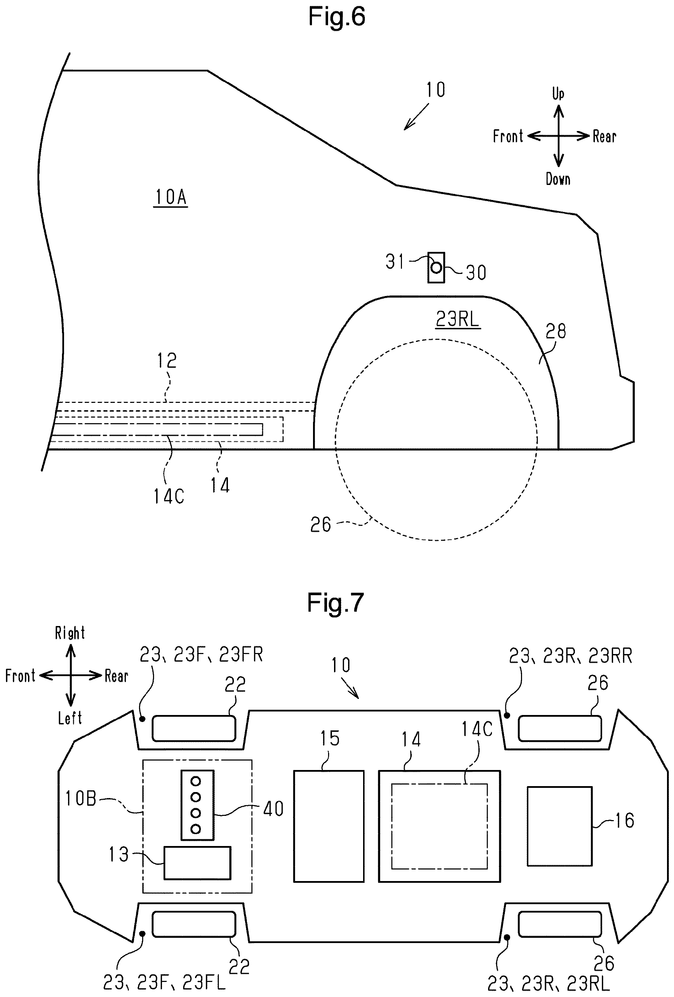

An electric vehicle 10 according to a second embodiment will now be described with reference to Figs. 6 to 8. The description will focus on the differences from the first embodiment. The same points will be briefly described or will not be described.

Fig. 6 schematically shows an internal structure of a rear portion of the electric vehicle 10 when the electric vehicle 10 is viewed from the left side.

As shown in Fig. 6, a rear left wheel well 23RL, which houses the left rear wheels 26, is disposed in the left side surface of the rear portion of the electric vehicle 10. The passenger compartment 10A and the rear left wheel well 23RL are separated from each other by a partition wall 28. The partition wall 28 is formed by a panel member and a frame member that form part of the vehicle body of the electric vehicle 10, and a plastic cover member that covers the surfaces of the panel member and the frame member. The rear left wheel well 23RL is located rearward of the battery pack 14.

The charging port 30 is provided in a left side surface of the electric vehicle 10. The charging port 30 is disposed above the battery pack 14. The charging port 30 is disposed rearward of the battery pack 14. The charging port 30 is disposed above the rear left wheel well 23RL.

Fig. 7 schematically shows the arrangement of devices disposed below the floor panel 12 when the electric vehicle 10 is viewed from above.

As shown in Fig. 7, the fuel tank 15 is disposed forward of the battery pack 14 and below the floor panel 12. The arrangement of the other devices is the same as the arrangement of the devices shown in Fig. 2, and a description thereof will be omitted.

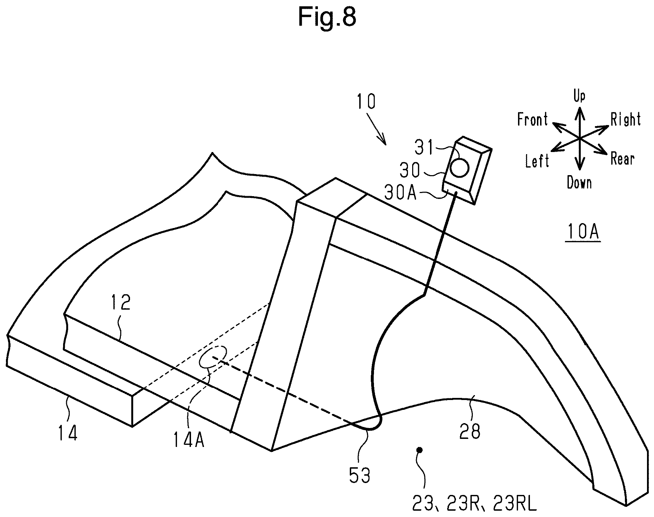

Fig. 8 schematically shows the internal structure of the electric vehicle 10 as viewed from a left-rear direction.

As shown in Fig. 8, the partition wall 28 separates the passenger compartment 10A from the rear left wheel well 23RL. The space on the outer side of the partition wall 28 in the vehicle width direction is the rear left wheel well 23RL.

The charging port 30 includes a first connection portion 30A, to which the third cable 53 is connected, on the lower surface. The battery pack 14 includes a second connection portion 14A, to which the third cable 53 is connected, on the front surface.

The third cable 53 is routed downward from the first connection portion 30A of the charging port 30 and then inward in the vehicle width direction along the rear left wheel well 23RL while further extending downward. The third cable 53 further extends forward from the lower end of the rear left wheel well 23RL at a position below the floor panel 12 and is connected to the second connection portion 14A of the battery pack 14. Since the third cable 53 of the second embodiment is the same as the third cable 53 of the first embodiment, a detailed description thereof will be omitted.

### Operation of the Second Embodiment

In the electric vehicle 10 of the present embodiment, the distance between the first connection portion 30A and the second connection portion 14A is shorter than in a vehicle in which the charging port 30 is disposed rearward of the battery pack 14 and the second connection portion 14A is provided on the front surface of the battery pack 14. In the electric vehicle 10 of the present embodiment, the distance between the first connection portion 30A and the second connection portion 14A is shorter than in a vehicle in which the charging port 30 is disposed forward of the battery pack 14 and the second connection portion 14A is provided on the rear surface of the battery pack 14. Accordingly, the length of the third cable 53, which electrically connects the charging port 30 and the battery pack 14, can be shortened.

### Advantages of the Second Embodiment

In addition to the advantage (1-1), (1-2), and (1-5) of the first embodiment, the second embodiment has the following advantages.

(2-1) When the third cable 53 is shortened, the weight of the third cable 53 is reduced, which in turn reduces the weight of the electric vehicle 10. When the third cable 53 is shortened, power loss in the third cable 53 is also reduced. In this manner, both the weight of the electric vehicle 10 and the power loss in the third cable 53 can be reduced.

(2-2) The electric vehicle 10 includes the engine 40, which is a power source, and the fuel tank 15, which stores fuel to be supplied to the engine 40. The fuel tank 15 is disposed forward of the battery pack 14 and below the floor panel 12. The second connection portion 14A is provided on the rear surface of the battery pack 14. The third cable 53 is routed rearward of the battery pack 14. This configuration reduces the possibility that the third cable 53 interferes with the fuel tank 15.

### Modifications of the Second Embodiment

The second embodiment may be modified as follows. The second embodiment and the following modifications related to the second embodiment can be combined as long as the combined modifications remain technically consistent with each other.

The charging port 30 may be disposed in the right side surface of the electric vehicle 10 and rearward of the battery pack 14. In this case, the third cable 53 is routed downward from the first connection portion 30A of the charging port 30 and then inward in the vehicle width direction along the rear right wheel well 23RR while further extending downward. The third cable 53 further extends forward from the lower end of the rear right wheel well 23RR at a position below the floor panel 12 and is connected to the second connection portion 14A of the battery pack 14.

The fuel tank 15 may be disposed rearward of the battery pack 14.

### Other Modifications

The following are modifications commonly applicable to the above-described embodiments. The following modifications can be combined as long as the combined modifications remain technically consistent with each other.

The first connection portion 30A does not necessarily need to be disposed on the lower surface of the charging port 30 in the vehicle vertical direction. For example, the first connection portion 30A may be disposed on the upper surface of the charging port 30. For example, the first connection portion 30A may be disposed on the front surface of the charging port 30. For example, the first connection portion 30A may be disposed on the rear surface of the charging port 30.

The charging port 30 may be disposed forward of the battery pack 14, the third cable 53 may extend along one of the rear wheel wells 23R, and the second connection portion 14A may be disposed on the front surface of the battery pack 14.

The charging port 30 may be disposed forward of the battery pack 14, the third cable 53 may extend along one of the front wheel wells 23F, and the second connection portion 14A may be disposed on the rear surface of the battery pack 14.

The charging port 30 may be disposed forward of the battery pack 14, the third cable 53 may extend along one of the rear wheel wells 23R, and the second connection portion 14A may be disposed on the rear surface of the battery pack 14.

The charging port 30 may be disposed rearward of the battery pack 14, the third cable 53 may extend along one of the front wheel wells 23F, and the second connection portion 14A may be disposed on the front surface of the battery pack 14.

The charging port 30 may be disposed rearward of the battery pack 14, the third cable 53 may extend along one of the rear wheel wells 23R, and the second connection portion 14A may be disposed on the front surface of the battery pack 14.

The charging port 30 may be disposed rearward of the battery pack 14, the third cable 53 may extend along one of the front wheel wells 23F, and the second connection portion 14A may be disposed on the rear surface of the battery pack 14.

The electric vehicle 10 may be configured to convert AC power supplied from an external power supply connected to the charging port 30 into DC power and charge the battery cell 14C with the DC power. In this case, the third cable 53, which electrically connects the charging port 30 and the battery, may be an AC cable through which AC current flows. For example, the third cable 53 may be an AC cable that connects the charging port 30 to a vehicle on-board charging unit that converts AC power into DC power. The vehicle on-board charging unit and the battery pack 14 are electrically connected by a DC cable.

The electric vehicle 10 is not limited to a plug-in hybrid electric vehicle. The electric vehicle 10 may be a battery electric vehicle that does not include the engine 40 and the fuel tank 15.

Various changes in form and details may be made to the examples above without departing from the spirit and scope of the claims and their equivalents. The examples are for the sake of description only, and not for purposes of limitation. Descriptions of features in each example are to be considered as being applicable to similar features or aspects in other examples. Suitable results may be achieved if sequences are performed in a different order, and/or if components in a described system, architecture, device, or circuit are combined differently, and/or replaced or supplemented by other components or their equivalents. The scope of the disclosure is not defined by the detailed description, but by the claims and their equivalents. All variations within the scope of the claims and their equivalents are included in the disclosure.

## Claims

1. An electric vehicle (10), comprising:
a passenger compartment (10A);
a floor panel (12) that forms a floor surface of the passenger compartment (10A);
a front compartment (10B) disposed forward of the passenger compartment (10A) in a vehicle front-rear direction;
a wheel well (23);
a motor (MG1, MG2) that is a power source;
a battery cell (14C) configured to store electric power to be supplied to the motor (MG1, MG2);
a battery pack (14) that accommodates the battery cell (14C) therein; and
a charging port (30) configured to be connected to a connector of an external power supply, wherein
the motor (MG1, MG2) is disposed in the front compartment (10B),
the battery pack (14) is disposed below the floor panel (12) in a vehicle vertical direction,
the charging port (30) is disposed in a side surface of the electric vehicle (10) and above the battery pack (14) in the vehicle vertical direction,
the battery pack (14) and the charging port (30) are electrically connected to each other by a cable (53), and
the cable (53) is routed downward from the charging port (30) in the vehicle vertical direction and then inward in a vehicle width direction along the wheel well (23), and further extends from a lower end of the wheel well (23) toward the battery pack (14) at a position below the floor panel (12) in the vehicle vertical direction, and is connected to the battery pack (14).

2. The electric vehicle (10) according to claim 1, further comprising a first connection portion (30A) to which the cable (53) is connected, the first connection portion (30A) being disposed on a lower surface of the charging port (30) in the vehicle vertical direction.

3. The electric vehicle (10) according to any one of claims 1 or 2, wherein the wheel well (23) is a front wheel well (23F) located forward of the battery pack (14) in the vehicle front-rear direction,
the charging port (30) is disposed forward of the battery pack (14), and the cable (53) extends along the front wheel well (23F), and
the electric vehicle (10) further comprises a second connection portion (14A) to which the cable (53) is connected, the second connection portion (14A) being disposed on a front surface of the battery pack (14) in the vehicle front-rear direction.

4. The electric vehicle (10) according to any one of claims 1 to 3, further comprising:
an engine (40) that is a power source; and
a fuel tank (15) configured to store fuel to be supplied to the engine (40),
wherein the fuel tank (15) is disposed rearward of the battery pack (14) in the vehicle front-rear direction and below the floor panel (12) in the vehicle vertical direction.

5. The electric vehicle (10) according to any one of claims 1 to 4, wherein
the wheel well (23) is a rear wheel well (23R) located rearward of the battery pack (14) in the vehicle front-rear direction,
the charging port (30) is disposed rearward of the battery pack (14), and the cable (53) extends along the rear wheel well (23R), and
the electric vehicle (10) further comprises a second connection portion (14A) to which the cable (53) is connected, the second connection portion (14A) being disposed on a rear surface of the battery pack (14) in the vehicle front-rear direction.

6. The electric vehicle (10) according to any one of claims 1 to 5, further comprising:
an engine (40) that is a power source; and
a fuel tank (15) configured to store fuel to be supplied to the engine (40),
wherein the fuel tank (15) is disposed forward of the battery pack (14) in the vehicle front-rear direction and below the floor panel (12) in the vehicle vertical direction.

7. The electric vehicle (10) according to any one of claims 1 to 6, wherein
the charging port (30) is configured to be connected to a DC power supply for fast charging, and
the cable (53) is a DC cable.
